Europäisches Patentamt

European Patent Office

Office européen des brevets

(19)

(11) Publication number: **0 253 457 B1**

(12) # EUROPEAN PATENT SPECIFICATION

(45) Date of publication of patent specification: **28.08.91**

(21) Application number: **87201544.1**

(22) Date of filing: **22.05.85**

The file contains technical information submitted after the application was filed and not included in this specification

(51) Int. Cl.⁵: **G02B 6/44**

(60) Publication number of the earlier application in accordance with Art.76 EPC: **0 165 632**

(54) **Method of manufacturing an optical flat type cable.**

(30) Priority: **23.05.84 NL 8401642**
**29.11.84 NL 8403629**

(43) Date of publication of application:
**20.01.88 Bulletin 88/03**

(45) Publication of the grant of the patent:
**28.08.91 Bulletin 91/35**

(84) Designated Contracting States:
**AT DE FR GB IT NL SE**

(56) References cited:
**EP-A- 0 031 972**      **EP-A- 0 104 864**
**WO-A-80/00376**      **FR-A- 2 276 410**
**FR-A- 2 393 327**      **US-A- 4 147 407**

(73) Proprietor: **N.V. Philips' Gloeilampenfabrieken**
**Groenewoudseweg 1**
**NL-5621 BA Eindhoven(NL)**

(72) Inventor: **Van der Velde, Hendrik Simon**
c/o **INT. OCTROOIBUREAU B.V. Prof. Holst-laan 6**
**NL-5656 AA Eindhoven(NL)**
Inventor: **Schildbach, Klaus Benno**
c/o **INT. OCTROOIBUREAU B.V. Prof. Holst-laan 6**
**NL-5656 AA Eindhoven(NL)**
Inventor: **Van der Maaden, Johan**
c/o **INT. OCTROOIBUREAU B.V. Prof. Holst-laan 6**
**NL-5656 AA Eindhoven(NL)**

(74) Representative: **Weening, Cornelis et al**
**INTERNATIONAAL OCTROOIBUREAU B.V.**
**Prof. Holstlaan 6**
**NL-5656 AA Eindhoven(NL)**

## Description

The invention relates to a method of manufacturing an optical flat type cable, in which several parallelly extending optical fibres situated in a flat plane are bonded together.

Such a cable is known from the German Offenlegungsschrift 27.24.536, page 2, first paragraph. It is stated that, although the cable has a good flexibility, it has on the other hand a low strength and breaks easily. It is suggested in the above-mentioned German Offenlegungsschrift to provide each fibre with a fixed or loose protecting cover and to provide thereon a cover of a soft synthetic resin. The fibres are interconnected via the cover of the soft synthetic resin. A cable comprising optical fibres which are provided with such a fixed synthetic cover is f.i. disclosed in U.S. Patent Specification 4,147,407. In this case, the covers are bridged together by solvent welding. If desired, an adhesive may also be used.

Such a cable is also described in the copending European patent application no. 85200818.4. More particularly according to the above patent application, the optical fibers are connected by means of a light curable lacquer which is present on the facing circumferential parts of the optical fibres. Said cable excels by its flexibility, mechanical rigidity and extremely low signal loss and hence is very suitable for practical use on a large scale.

The object of the present invention is to provide a method by which said optical flat type cable can be produced in an efficient, fast and reproducible manner.

According to the invention, this object is achieved by means of a method of the type mentioned in the opening paragraph, said method comprising: guiding a number of parallelly extending optical fibres over a first roller or system of rollers whose surface(s) comprise(s) a layer of light-curable lacquer, whereby the fibres are provided on one side with a layer of lacquer; subsequently guiding the thus covered fibres over a second roller or system of rollers the thaft(s) of which is (are) at right angles to that of the first roller or system of rollers, so that the fibres are rotated through an angle of 90° whilst approaching and subsequently engaging each other, whereby the sides of the fibres covered with lacquer are caused to face and substantially contact each other, and finally exposing the thus obtained assembly of optical fibres to light, thereby resulting in said optical flat type cable.

The special aspect of the method according to the invention is that due to the rotation of the fibres through 90° the fibre bundle is self-calibrating. The fibres do the centring themselves, i.e. they automatically engage each other, the provided lacquer being present only between the facing circumferential parts of the fibres.

So an important advantage of the method according to the invention is that no separate calibrating or centring device is necessary to get the fibres in their places, i.e. parallel against each other. Another important advantage is that the lacquer also lands in the correct place, i.e. only between the fibres.

The invention will be described in greater detail with reference to the drawings, in which

Figure 1 is a cross-sectional view of an optical flat type cable manufactured according to the invention,

Figure 2 shows another embodiment of an optical flat type cable, manufactured according to the invention,

Figure 3 shows diagrammatically a device for carrying out the method of manufacturing a flat type cable according to the invention.

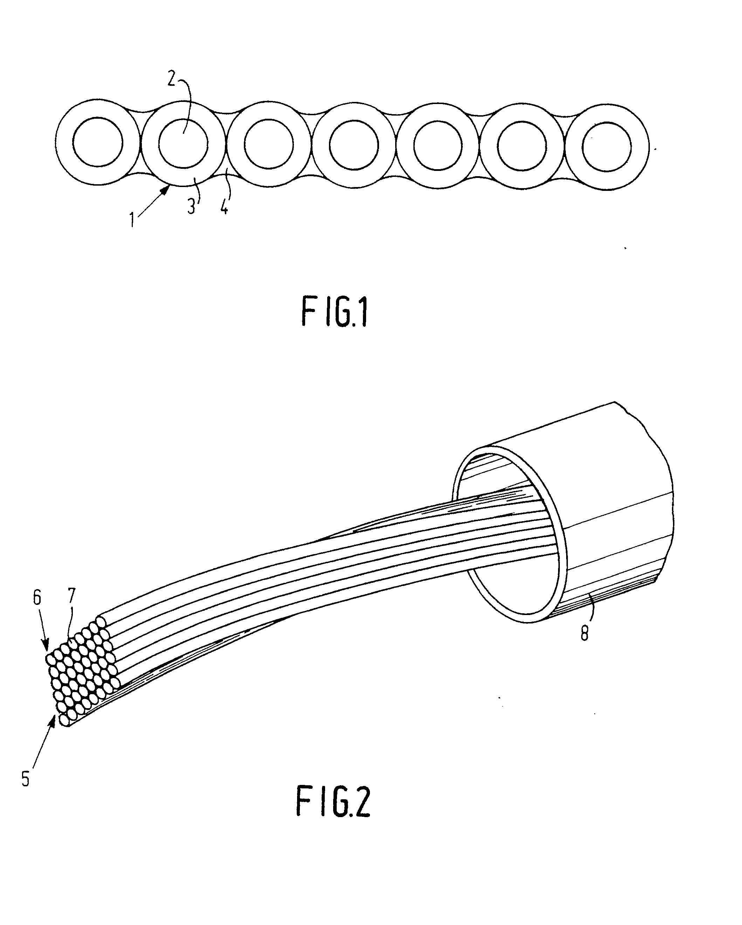

Reference numeral 1 in Figure 1 denotes an optical fibre (glass fibre) as it is marketed by the manufacturer of optical fibres. The optical fibre 1 always consists of a glass fibre 2 which has been provided by the manufacturer with a protective layer 3, the so-called primary coating, which is usually manufactured from U.V.-light-cured acrylates. The primary coating 3 may consist of one or two layers. Without the primary coating, the optical fibre would be damaged very rapidly, so that the glass (optical) fibre 2, immediately after the manufacture thereof, is provided with the thin protective layer 3. The thickness of the primary coating 3 is approximately 62 $\mu$m. The optical (glass) fibre 2 has a diameter of 125 $\mu$m.

The optical fibres 1 are interconnected by a light-cured lacquer 4 of acrylic acid esters which is present only on the facing parts of the fibres 1. At the area of the lacquer 4 the fibres 1 engage each other or engage each other substantially. Examples of suitable lacquer compositions (prior to curing) are:

a) 25% by weight of expoxyacrylate (75% by weight solution) in tripropylene glycol diacrylate),
35% by weight of aromatic urethane acrylate,
16% by weight of tripropylene glycol diacrylate,
16% by weight of unsaturated tertiary amine (co-initiator)
8% by weight of benzophenone (initiator).

b) 30% by weight of epoxyacrylate (75% solution in tripropylene glycol diacrylate),
40% by weight of aromatic urethane acrylate,
25% by weight of tripropylene glycol diacrylate,
1% by weight of ethanol,
4% by weight of benzildimethyl ketal (initiator).

c) 58% by weight of chlorinated polyester (60% solution in 1,6-hexanediol diacrylate)
38% by weight of semi-ester of phthalic acid and hydroxy ethyl acrylate,
4% by weight of benzildimethyl ketal (initiator).

Reference numeral 5 in Figure 2 denotes a pack of eight stacked flat type cables 6. Each flat type cable is in conformity with Figure 1 with the proviso that six optical fibres 7 are incorporated in each flat type cable 6. The pack 5 is twisted about its longitudinal axis and is enveloped by a loose tubular cover 8. Cover 8 is manufactured, for example, from metal. Cover 8 is preferably manufactured from a synthetic resin which has been formed into a tube by means of an extrusion process. The pack 5 is loose in cover 8. The pack has a cross-section of, for example 2.5 x 2.5 mm and the cover 8 has an inside diameter of, for example, 6-10 mm.

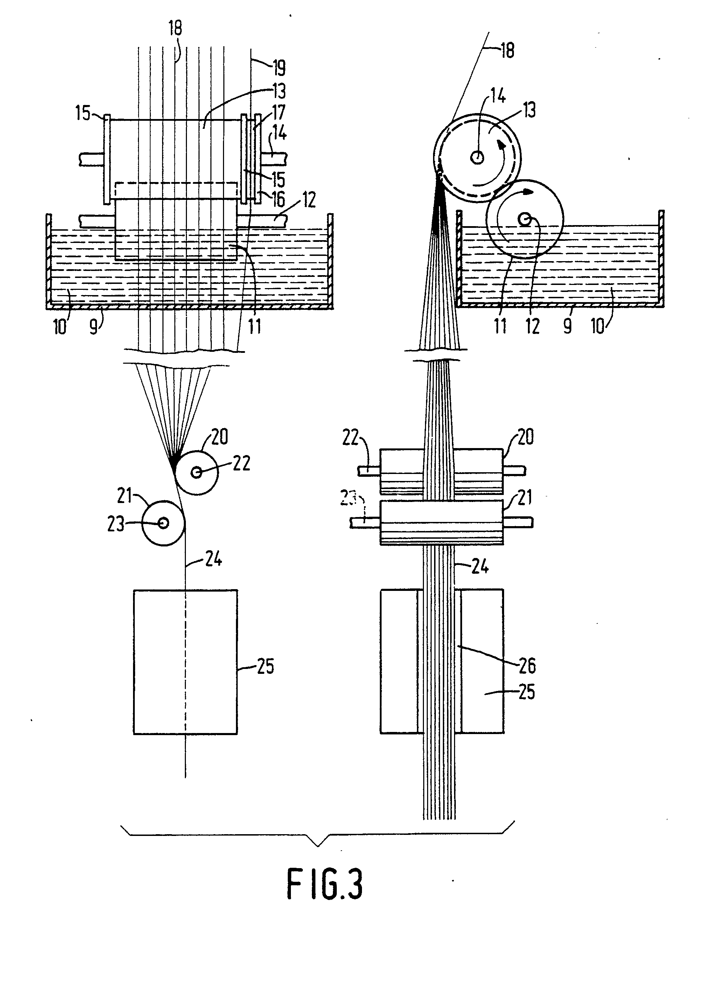

Figure 3 is composed of two parts. The left-hand part of Figure 3 is a side elevation of the right-hand part which is a cross-sectional view of a device for carrying out the manufacturing method according to the invention. Reference numeral 9 in Figure 3 denotes a reservoir containing an ultraviolet light-curable lacquer composition 10. Examples of suitable lacquer compositions are recorded hereinbefore. A driving roller 11 on shaft 12 rotates in reservoir 9, roller 11 being immersed, for example half, in the liquid lacquer 10. The rate of rotation is by way of example 30 r.p.m. Parallel to driving roller 11 a lacquer roller 13 on shaft 14 is provided. The spacing between lacquer roller 13 and driving roller 11 is approximately 0.1 mm. Lacquer roller 13 hence is provided with a layer of lacquer, not shown via driving rollers 11. Lacquer roller 13 has two flanges 15. The surface of lacquer roller 13 provided with a layer of lacquer is present between the flanges 15. A flange 16 ensures that the part 17 of lacquer roller 13 does not comprise a layer of lacquer. Nine optical fibres 18 are guided over lacquer roller 13 at a speed of, for example, 40-70 metres per minute. The fibres, the outermost fibre 19 excepted, are consequently provided on one side with a layer of lacquer. The fibres are then guided over two guide rollers 20 and 21, respectively. The shafts 22, 23 of the guide rollers are at right angles to the shaft 14 of the lacquer roller 13. As a result of this the fibres are rotated through a quarter of a turn, the circumferential parts of the fibres provided with lacquer being made to face each other. The lacquer is now present between the fibres. It is furthermore achieved that the fibres do the centring themselves and will engage each other or will engage each other substantially. The bundle of fibres 24 thus formed is then exposed to light, the bundle traversing an exposure zone 26 bounded by U.V.-lamps. As a result of this the lacquer is cured and a flat type cable similar to that shown in Figure 1 is obtained. The resulting flat type cable is extremely flexible, has a good mechanical rigidity and shows an extremely low signal loss with respect to the loose optical fibres (not processed to form a flat type cable) of 0.09 dB per km.

## Claims

1. A method of manufacturing an optical flat type cable in which several parallelly extending optical fibres situated in a flat plane are bonded together, said method comprising: guiding a number of parallelly extending optical fibres over a first roller or system of rollers whose surface(s) comprise(s) a layer of light-curable lacquer, whereby the fibres are provided on one side with a layer of lacquer; subsequently guiding the thus covered fibres over a second roller or system of rollers the shaft(s) of which is (are) at right angles to that of the first roller or system of rollers, so that the fibres are rotated through an angle of 90° whilst approaching and subsequently engaging each other, whereby the sides of the fibres covered with lacquer are caused to face and substantially contact each other, and finally exposing the thus obtained assembly of optical fibres to light, thereby resulting in said optical flat type cable.

## Revendications

1. Procédé pour la fabrication d'un câble optique en forme de ruban dans lequel plusieurs fibres optiques parallèles situées dans un plan sont reliées entre elles, caractérisé en ce que ledit procédé comprend: le guidage de plusieurs fibres optiques parallèles sur un premier rouleau ou système de rouleaux dont la (les) surface(s) présente(nt) une couche en vernis durcissable à la lumière, les fibres étant munies d'un côté d'une couche de vernis; ensuite le guidage des fibres ainsi recouvertes sur un deuxième rouleau ou système de rouleaux dont l' (les) axe(s) est (sont) perpendiculaire(s) à celui (ceux) du premier rouleau ou système de rouleaux de sorte que les fibres sont tournées d'un angle de 90° tout en s'approchant les unes des autres et en s'appliquant ensuite les unes contre les autres, les faces des fibres recouvertes de vernis étant disposées vis-à-vis les unes des autres et essentiellement en contact les unes avec les autres et finalement, exposition de l'ensemble ainsi obtenu de fibres optiques à de la lumière, ce qui fournit ledit câble optique en forme de ruban.

## Patentansprüche

1. Verfahren zum Herstellen eines optischen Bandkabels, wobei mehrere sich parallel zueinander erstreckende optische Fasern in einer Ebene liegend miteinander verbunden werden, wobei dieses Verfahren die nachfolgenden Verfahrensschritte aufweist: das Führen einer Anzahl sich parallel zueinander erstreckender optischer Fasern über eine erste Rolle bzw. ein erstes System von Rollen, deren Oberfläche(n) eine Schicht aus einem lichthärtbaren Lack enthält (enthalten), wodurch die Fasern auf einer Seite mit einer Lackschicht bedeckt werden; das nachfolgende Führen der auf diese Weise bedeckten Fasern über eine zweite Rolle bzw. ein zweites System von Rollen, deren Achse(n) winkelrecht zu der (denen) der ersten Rolle bzw. des ersten Systems von Rollen steht, so daß die Fasern über einen Winkel von 90° in derselben Richtung gedreht werden, wenn sie sich nähern und danach miteinander verbunden werden, wodurch die mit Lack bedeckten Seiten der Fasern einander zugewandt werden und sich nahezu kontaktieren; und zum Schluß einen Verfahrensschritt, bei dem das auf diese Weise erhaltene Gefüge aus optischen Fasern dem Licht ausgesetzt wird, was zu dem genannten optischen Flachkabel führt.

F IG.1

FIG.2

FIG.3